# EUROPÄISCHE PATENTSCHRIFT

(11) **EP 2 912 709 B1**
(45) Veröffentlichungstag und Bekanntmachung des Hinweises auf die Patenterteilung: **24.08.2016**
(21) Anmeldenummer: 13725054.4
(22) Anmeldetag: 20.02.2013
(51) Int. Cl.: H01M 2/38

(54) **BATTERIE MIT ELEKTROLYTDURCHMISCHUNGSVORRICHTUNG**
BATTERY WITH ELECTROLYTE MIXING DEVICE
BATTERIE POURVUE D'UN DISPOSITIF DE MÉLANGEAGE DE L'ÉLECTROLYTE

(30) Priorität: 28.11.2012 DE 102012023314
(43) Veröffentlichungstag der Anmeldung: 02.09.2015
(73) Patentinhaber: IQ Power Licensing AG, 6304 Zug (CH); Sullivan, Charles Robert, 58638 Iserlohn (DE)
(72) Erfinder: SULLIVAN, Charles, Robert, 58638 Iserlohn (DE); TSCHIRCH, Steffen, 09405 Zschopau (DE)
(74) Vertreter: Staudte, Ralph
(86) Internationale Anmeldenummer: PCT/DE2013/000092
(87) Internationale Veröffentlichungsnummer: WO 2014/082612

(56) Entgegenhaltungen:
- DE-A1- 19 823 916
- DE-A1-102006 038 047
- DE-B3-102006 021 578
- US-A- 4 963 444
- US-A- 5 096 787

## Beschreibung

Die Erfindung betrifft eine Batterie mit flüssigem Elektrolyt, die vorzugsweise in bewegten Fahrzeugen, wie z. B. in PKW, Booten oder Flugzeugen zum Einsatz kommt und eine Vorrichtung zur Elektrolytdurchmischung aufweist.

Das Bestreben der Fahrzeugindustrie nach Leichtbauweise betrifft auch die Einsparung von Batteriegewicht. Gleichzeitig steigt jedoch die Anforderung nach höherer Batterieleistung, da neben der herkömmlichen Energie zum Starten z. B. eines PKW auch Energie für zusätzliche Aggregate wie elektrische Fensterheber, Stellmotore zum Verstellen der Sitze oder auch zum elektrischen Beheizen der Sitze benötigt wird. Ferner ist es wünschenswert, die Batterieleistung über die Lebensdauer der Batterie möglichst auf einem konstanten hohen Niveau zu halten, da zunehmend auch sicherheitsrelevante Funktionseinheiten wie Lenkung und Bremsen elektrisch gesteuert und betätigt werden. Unter Batterieleistung wird nachfolgend die Kapazität der Batterie sowie die Fähigkeit der Batterie zur Stromabgabe bzw. zur Stromaufnahme verstanden. Die Batterieleistung wird von verschiedenen, dem Fachmann bekannten Faktoren beeinflusst.

Aus dem Stand der Technik sind die Maßnahmen bekannt, um die Leistung einer Batterie mit einem flüssigen Elektrolyten, wie z. B. einer Blei-Säure-Batterie, zu erhöhen. Ein besonderes Problem bei Blei-Säure-Batterien ist die sogenannte Stratifikation der Säure, d. h. die Säurekonzentration ist bezüglich der Elektrodenfläche nicht gleichmäßig. Das bewirkt, dass die Elektroden an Stellen, an denen die Säurekonzentration zu hoch ist, korrodieren, sodass sich die Lebensdauer der Batterie vermindert, und durch Elektrodenstellen, an denen die Säurekonzentration zu gering ist, die Batterie nicht ihre volle Leistung erreicht.

Nachfolgend wird der Elektrolyt immer als Säure bezeichnet, da es sich in den meisten Fällen der Anwendung dieser Erfindung um Blei-Säure-Batterien handelt. Die Erfindung ist jedoch auf jede Flüssigelektrolytbatterie anwendbar, deren Elektrolyt zur Stratifikation neigt.

Daher sind unterschiedliche Vorrichtungen und Verfahren entwickelt worden, um die Säure zu durchmischen, damit die Säurekonzentration in allen Volumenabschnitten der Batterie möglichst gleich groß ist. Bei stationären Batterien wird z. B. Luft in den Elektrolyten eingeblasen.

Für Fahrzeugbatterien sind Säuredurchmischungsvorrichtungen bekannt, die die Masseträgheit der Säure bei Beschleunigungsvorgängen ausnutzen. Diese Technik ist dem Fachmann bekannt, sodass lediglich beispielhaft auf die Dokumente US 4,963,444 und DE 297 18 004.5 verwiesen wird.

Es gibt Starterbatterien mit einer besonders hohen Bauform. Bei diesen Starterbatterien muss die in einem Aufstiegskanal vorhandene Säure durch die Beschleunigung über eine größere Strecke von unten nach oben gedrückt werden, wozu eine größere Energie erforderlich ist. Da die Energie zum Bewegen der Säure im Kanal durch die Fahrzeugbeschleunigung erzeugt wird, ist deren Größe begrenzt.

Es ist somit die Aufgabe der Erfindung, eine Batterie mit einer Elektrolyt-durchmischungsvorrichtung bereitzustellen, die so effizient ist, dass auch Batterien mit höherer Bauform gut durchmischt werden.

Die Aufgabe wird mittels einer Batterie nach Anspruch 1 gelöst, wobei die Batterie aufweist:

Ein Batteriegehäuse mit Seitenwänden, einem Gehäuseboden und einer Abdeckung. Diese Anordnung bildet eine Batteriezelle. In der Regel sind mehrere solcher Batteriezellen zu einer Batterie mit einem Mehrfachgehäuse zusammengefasst. In dem vorzugsweise rechteckigen Batteriegehäuse sind plattenförmige Elektroden senkrecht angeordnet. Die Elektroden sind vollständig mit Säure bedeckt.

Wenigstens an einer Seitenwand des Batteriegehäuses ist in einem bestimmten Abstand und parallel zu dieser eine Strömungskanalplatte angeordnet, so dass zwischen der Batteriegehäusewand und der Strömungskanalplatte ein senkrechter und flüssigkeitsdichter Strömungskanal ausbildet ist. Alternativ zu dieser Anordnung kann der Strömungskanal auch als doppelwandige Strömungskanalplatte ausgebildet sein, d.h. als ein stark zusammengedrücktes Rohr mit schlitzförmigem Hohlraumquerschnitt.

Das obere Ende des Strömungskanals ist somit ein Ausströmschlitz. Neben dem Ausströmschlitz ist eine Mischwanne vorgesehen, welche senkrechte Seitenwände und einen waagerechten Boden aufweist. Die an den Ausströmschlitz grenzende Seitenwand der Mischwanne bildet die Überlaufkante des Ausströmschlitzes. Der Boden der Mischwanne liegt immer unterhalb des betriebsmäßig vorgesehenen Mindestpegels der Säure und ist mit wenigstens einer Bodenöffnung mit einem vorbestimmten Querschnitt versehen.

Wie im Ausführungsbeispiel noch näher erläutert ist, wird bei einer Beschleunigung des Fahrzeugs und somit der Batterie ein bestimmte Säuremenge durch den senkrechten Strömungskanal nach oben gedrückt, so dass Säure aus den Ausströmschlitz austritt und über die Überlaufkante in die Mischwanne läuft. Da sich die Strömungskanalplatte wenigstens bis in das untere Drittel des Säurevolumens erstreckt und die dort vorhandene Säure eine höhere Dichte hat, wird somit Säure mit dieser höheren Dichte in die Mischwanne geleitet.

Gleichzeitig mit dem Einlaufen von Säure höherer Dichte in die Mischwanne wird während der Beschleunigung auch leichte Säure, d. h. Säure mit geringerer Dichte, die sich unterhalb der Mischwanne befindet, durch die Bodenöffnung in die Mischwanne gedrückt.

Somit findet in der Mischwanne ein Vermischen von Säure mit höherer Dichte und Säure mit geringerer Dichte statt.

Mit anderen Worten, im Ruhezustand der Batterie befindet sich Säure mit niedrigerer Dichte in der Mischwanne, da die Mischwanne über die Bodenöffnung mit dem Säurevolumen der Batterie verbunden ist. Während der Beschleunigung wird durch die Bodenöffnung weitere Säure mit geringerer Dichte in die Mischwanne gedrückt und gleichzeitig durch den Strömungskanal dichtere Säure aus dem unteren Volumenbereich des Batteriekastens in die Mischwanne geleitet. Somit ist während der Beschleunigung des Fahrzeugs und damit der Batterie mehr Säure in der Mischwanne als im Ruhezustand.

Die in der Mischwanne nach dem Beschleunigungsvorgang gemischte Säure, nachfolgend Mischsäure genannt, hat eine geringfügig höhere Dichte als die durch die Bodenöffnung eingeströmte Säure und die in der Mischwanne vor dem Mischvorgang bereits vorhandene Säure. Bei Verringerung der Beschleunigung auf den Wert Null fließt von der in der Mischwanne nunmehr vorhandenen Mischsäure eine größere Menge durch die Bodenöffnung und eine kleinere Menge durch den Strömungskanal in den Batteriekasten zurück, bis sich der normale Säurepegel wieder eingestellt hat.

Mit der Durchmischung von Säurevolumina unterschiedlicher Dichte in der Mischwanne wird auch bei Batterien mit größerer Bauhöhe eine wesentlich bessere Durchmischung als mit den bekannten Lösungen aus dem Stand der Technik bewirkt.

Eine schnellere Umwälzung des Elektrolyten bewirkt auch einen schnellen Temperaturausgleich innerhalb der Batteriezelle, wodurch die Lebensdauer der Batterie erhöht wird. Dieser Aspekt ist von Bedeutung, wenn die Batterie z. B. im Motorraum eines Fahrzeugs eingebaut ist und durch Motorwärmestrahlungen einseitig erwärmt wird. Insofern bringt die Erfindung auch bei Standardbatterien positive Effekte, wie eine höhere Lebensdauer und ein besseres Vermögen hinsichtlich Stromaufnahme und auch Stromabgabe.

Nach Anspruch 2 wird eine noch weitere Verbesserung der Durchmischung bewirkt, wenn die Bodenöffnung der Mischwanne an der Stelle vorgesehen ist, an welcher die Säure mit der höheren Dichte auf den Boden der Mischwanne läuft, d. h. unmittelbar neben dem Ausströmschlitz. Da das Überlaufen der dichteren Säure von oben in die Mischwanne und das Einströmen der dünnen Säure von unten nahezu gleichzeitig erfolgen, werden die unmittelbar aufeinander treffenden Säurevolumina miteinander verwirbelt und somit gut vermischt.

Nach Anspruch 3 ist in der innen liegenden Wand der Mischwanne eine Öffnung vorgesehen, die die Durchmischung weiter verbessert.

Nach Anspruch 4 ist eine zweite Mischwanne vorgesehen, die sich an die innenliegende Wand der ersten Mischwanne anschließt, wobei im Boden der zweiten Mischwanne wenigstens eine Bodenöffnung vorgesehen ist. Dadurch wird die Durchmischung weiter verbessert.

Nach Anspruch 5 liegt der Boden der zweiten Mischwanne in der Höhe des Maximalpegels der Säure, d. h. der Boden der zweiten Mischwanne liegt höher als der Boden der ersten Mischwanne. Dadurch wird die Durchmischung weiter verbessert.

Die Erfindung wird nachfolgend anhand eines Ausführungsbeispiels näher erläutert.
- Fig. 1: zeigt eine Querschnittsansicht einer Batteriekastenzelle und die Säurepegel in einer ersten Phase.
- Fig. 2: zeigt den Gegenstand nach Fig. 1 und die Säurepegel in einer zweiten Phase.
- Fig. 3: zeigt den Gegenstand nach Fig. 1 und die Säurepegel in einer dritten Phase.
- Fig. 4: zeigt den Gegenstand nach Fig. 1 und die Säurepegel in einer vierten Phase.
- Fig. 5: zeigt den Gegenstand nach Fig. 1 und die Säurepegel in einer fünften Phase, die mit der ersten Phase identisch ist.
- Fig. 6a, b: zeigen den Gegenstand nach Fig. 1 in einer abgewandelten Ausführungsform und die Draufsicht davon.
- Fig. 7: zeigt eine perspektivische Ansicht der Durchmischungsvorrichtung mit zwei Mischwannen.
- Fig. 8: zeigt eine perspektivische Ansicht der Durchmischungsvorrichtung mit zwei Mischwannen in einer zweiten Ausführungsform.
- Fig. 9: zeigt in perspektivischer Ansicht einen leeren Batteriekasten mit 6 Zellen.

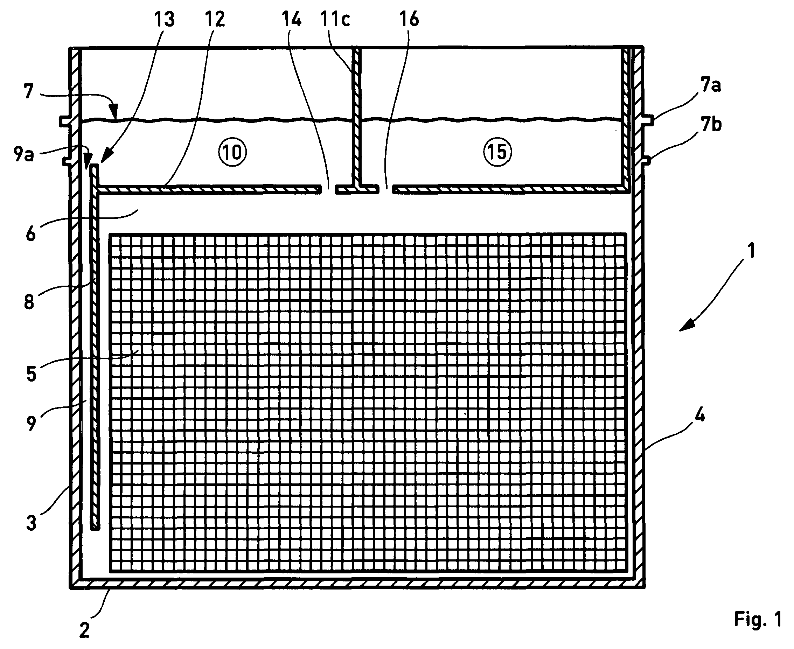

Die Fig. 1 zeigt eine Querschnittsansicht einer Batteriekastenzelle. Die Batteriekastenzelle 1 weist einen rechteckigen Querschnitt mit einem Boden 2 und vier Seitenwänden auf, wobei in dieser Darstellung nur die Seitenwände 3 und 4 sichtbar sind. Mit dem Bezugszeichen 5 sind die plattenförmigen Elektroden und mit dem Bezugszeichen 6 ist die Batteriesäure bezeichnet, deren Pegelstand 7 zwischen einem maximalen Pegel 7a und einem minimalem Pegel 7b liegt. Wie aus der Zeichnung ersichtlich, liegt der eingezeichnete Pegelstand an der Markierung des maximalen Pegels 7a.

Zwischen der Seitenwand 3 und den Elektroden 5 ist eine Strömungskanal-platte 8 senkrecht angeordnet, so dass ein Strömungskanal 9 ausgebildet wird. Das Ende des Strömungskanals 9 ist somit ein Ausströmschlitz 9a.

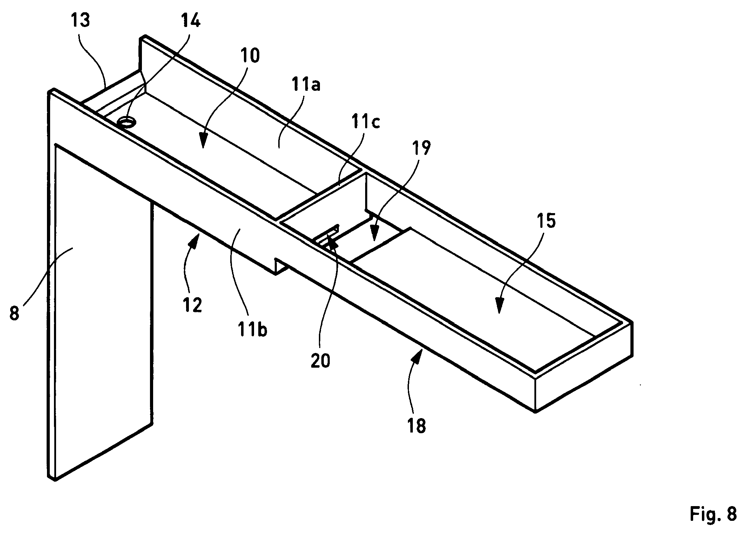

Neben dem Ausströmschlitz 9a ist eine Mischwanne 10 vorgesehen, welche Seitenwände 11a, 11 b, 11 c und einen Boden 12 aufweist, wobei die Seitenwände 11a und 11 b nur in der perspektivischen Zeichnung Fig. 8 sichtbar sind. Das obere Ende der Strömungskanalplatte 8 bildet eine Überlaufkante 13. Der Boden 12 der Mischwanne 10 liegt immer unterhalb des betriebsmäßig vorgesehenen Mindestpegels 7b der Batteriesäure 7 und ist mit wenigstens einer Bodenöffnung 14 mit einem vorbestimmten Querschnitt versehen. Neben der Mischwanne 10 ist eine weitere Mischwanne 15 mit einer Bodenöffnung 16 vorgesehen, die jedoch optional ist und lediglich eine weitere Verbesserung der Durchmischung bewirkt.

Nachfolgend wird die Funktion der Durchmischungsvorrichtung beschrieben:

Die Fig. 1 zeigt eine ruhende Batterie mit einem waagerechten Elektrolytpegel 7. Es wird angenommen, dass in der Batterie eine Säureschichtung eingetreten ist, d. h. die Säure am Boden der Batterie hat eine höhere Dichte als die Säure im oberen Batterieabschnitt und die in der Mischwanne stehende Säure.

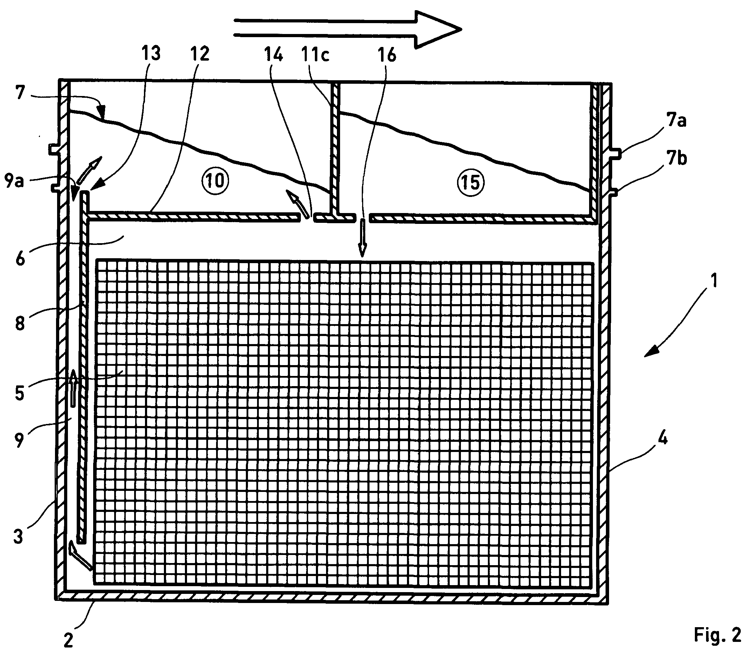

Die Fig. 2 zeigt die Bewegung der Säure bei einer positiven Beschleunigung des Fahrzeugs in Pfeilrichtung nach rechts. Die gleiche Wirkung entsteht bei einer negativen Beschleunigung nach links, d. h. beim Abbremsen des in Pfeilrichtung fahrenden Fahrzeugs. Dabei stellt sich in der Mischwanne 10 ein schräg verlaufender Säurepegel 7 ein. Durch den Strömungskanal 9 strömt Säure mit größerer Dichte aufwärts und fließt über die Überlaufkante 13 in die Mischwanne 10. Durch die Bodenöffnung 14 strömt in dieser Bewegungsphase Säure mit geringerer Dichte ebenfalls in die Mischwanne 10. Somit liegt jetzt in der Mischwanne 10 eine Mischsäure vor, deren Dichte geringer ist als die Säuredichte am Boden der Batterie und höher ist als die Säuredichte im Bereich des Säurepegels.

In der Mischwanne 15, die optional ist, wird durch den schräg verlaufenden Säurepegel etwas Säure durch die Bodenöffnung 16 abwärts geleitet.

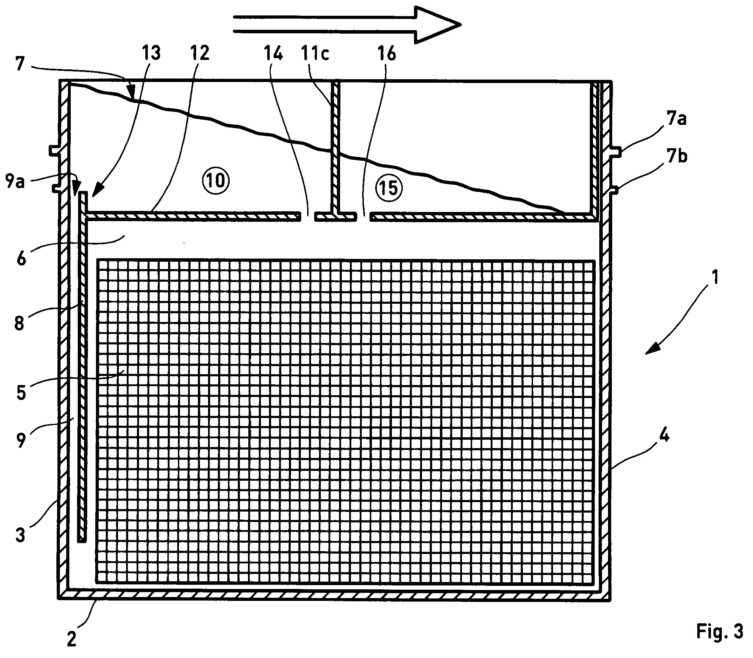

Die Fig. 3 zeigt die Situation, in der noch die konstante Beschleunigung wirkt, jedoch keine Ausgleichsströmungen mehr erfolgen. Daher sind auch keine Strömungspfeile eingezeichnet.

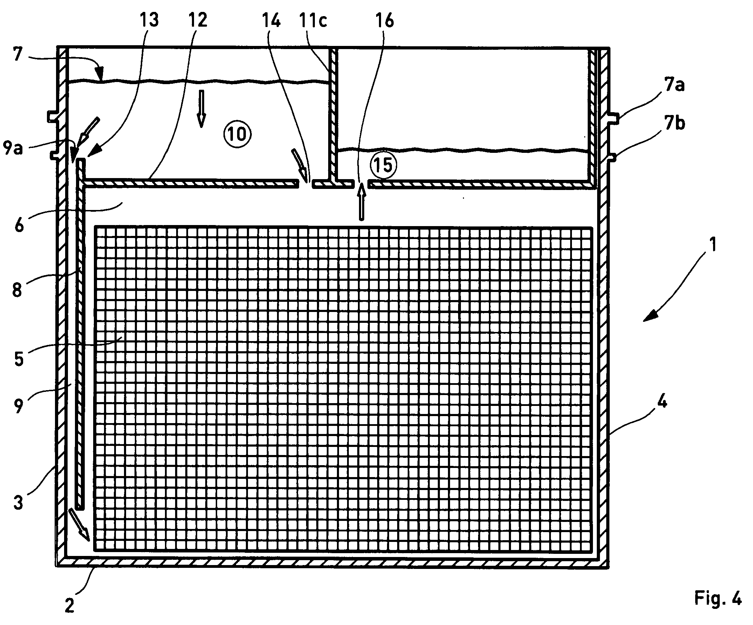

Die Fig. 4 zeigt die Situation, in der die Beschleunigung gleich Null ist, d. h. wenn das Fahrzeug mit konstanter Geschwindigkeit fährt oder steht. Die Säurepegel sind demzufolge waagerecht. Die Strömungspfeile zeigen an, dass ein Pegelausgleich über alle 3 Öffnungen 9a, 14 und 16 erfolgt. Es ist besonders zu erwähnen, dass durch die räumliche Verteilung dieser Öffnungen die Säure somit an verschiedenen Stellen ein- und ausströmt und sich dadurch eine schnellere Durchmischung einstellt.

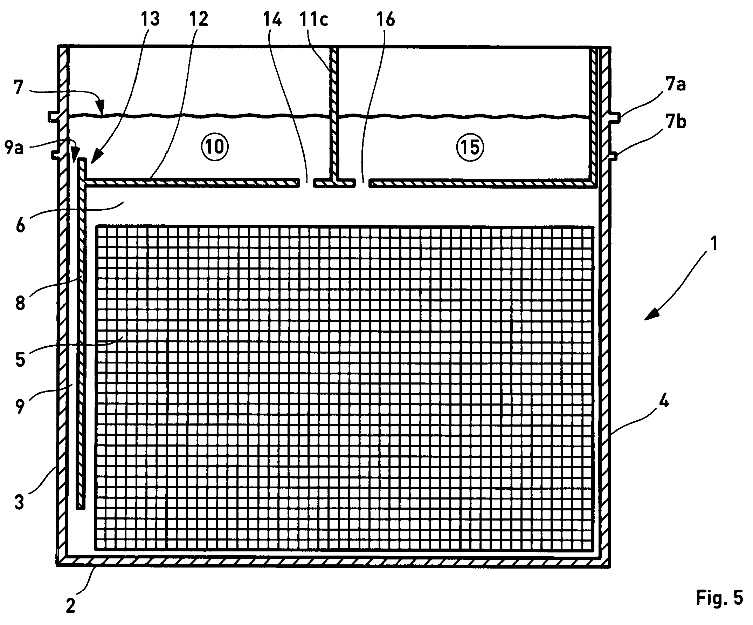

Die Fig. 5 zeigt die Situation wie in Fig. 1, in der sich die Pegelstände angeglichen haben, jedoch ist nun die Säure durchmischt.

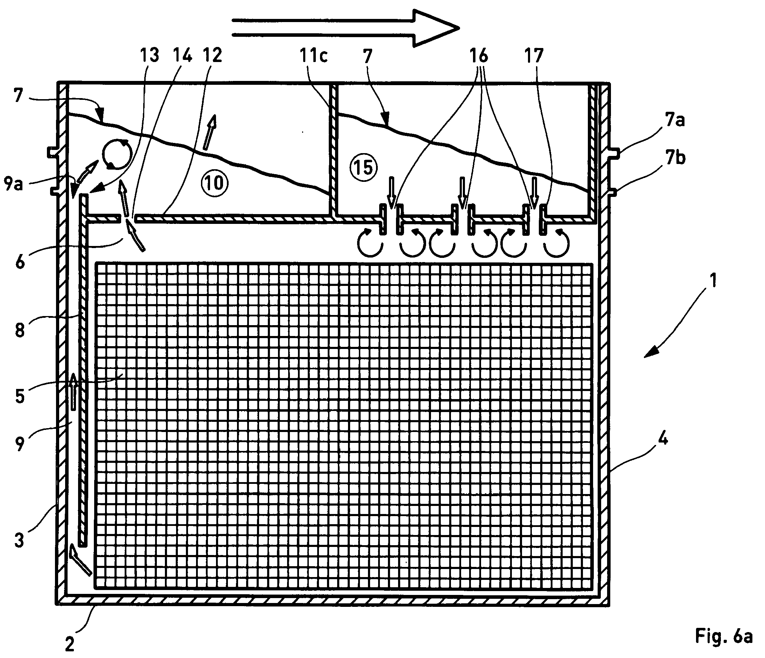

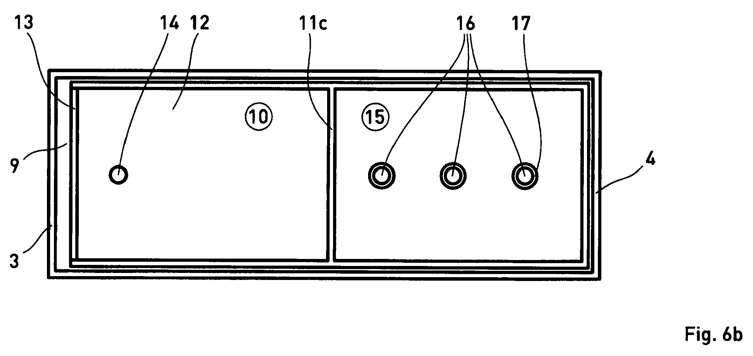

Die Fig. 6a und 6b zeigen eine abgewandelte Ausführungsform der Erfindung in der Seitenansicht und in der Draufsicht. In der Mischwanne 10 ist das Bodenloch 14 in der Nähe des Ausströmschlitzes 9a angeordnet. Das führt zu einer besonders effektiven Durchmischung der aufeinander strömenden Säurevolumina unterschiedlicher Dichte, was mit dem Ringpfeil symbolisiert wird. Weiterhin sind in der zweiten Mischwanne 15 drei Bodenöffnungen 16 vorgesehen. Diese Öffnungen werden durch schräg in den Boden eingesetzte Röhrchen gebildet, um einen Strömungswiderstand zu erzeugen und somit eine zusätzliche Verwirbelung und verbesserte Durchmischung der Säure zu bewirken. Dieser Effekt wird durch die Schrägstellung der Röhrchen 17 noch erhöht.

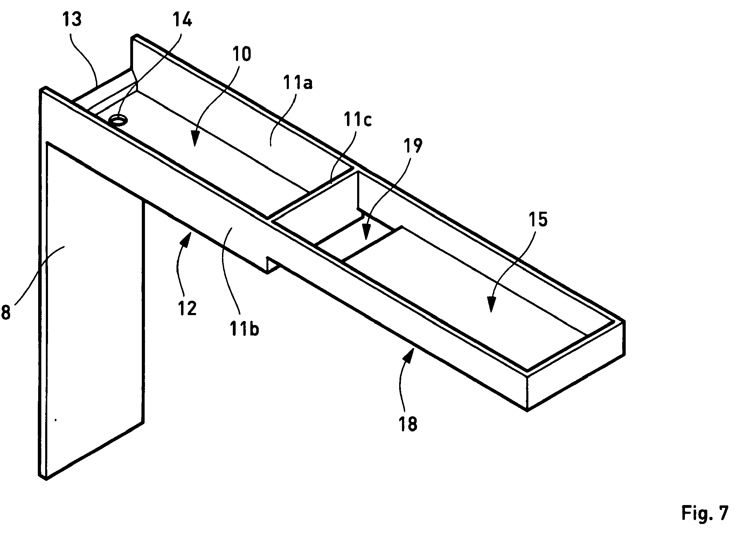

Die Fig. 7 zeigt eine perspektivische Ansicht der Durchmischungsvorrichtung mit zwei Mischwannen 10 und 15, wobei der Boden 18 der zweiten Mischwanne 15 in der Ebene des Maximalpegels der Batteriesäure liegt und eine Aussparung 19 aufweist.

Die Fig. 8 zeigt eine Durchmischungsvorrichtung nach Fig. 7, die sich aber von jener darin unterschiedet, dass die innere Seitenwand der ersten Mischwanne 10 mit einer schlitzförmigen Öffnung 20 versehen ist.

Es ist anzumerken, dass die Querschnitte der Boden- und Seitenöffnungen der ersten Mischwanne 10 vom Fachmann optimiert werden können. Die Querschnittform der Boden- und Seitenöffnungen muss nicht kreisförmig sein. Bei herkömmlichen PKW-Batterien entsprechen die Querschnitte der im Boden und in den Seitenwänden vorhandenen Öffnungen den Querschnitten kreisförmiger Löcher mit einem Durchmesser von 1,2 bis 10 mm und bei LKW-Batterien Löcher mit einem Durchmesser von 5 - 20 mm.

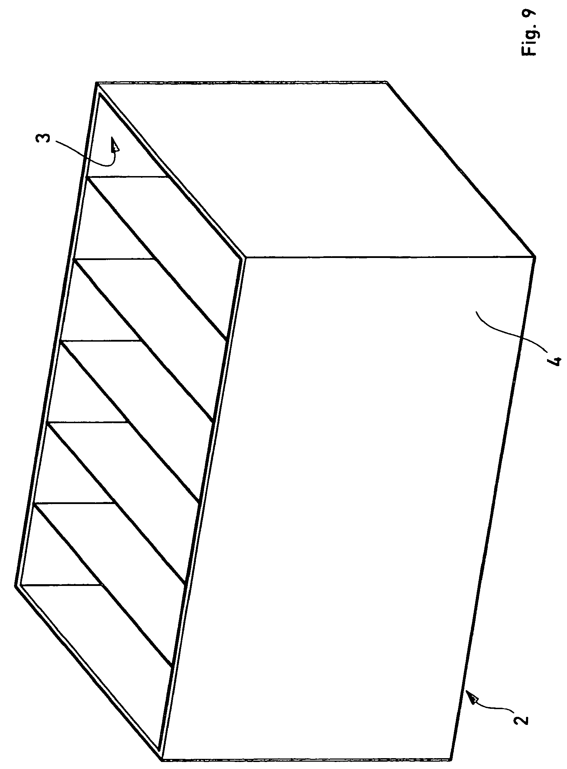

Die Fig. 9 zeigt einen leeren Batteriekasten mit 6 Zellen, wobei in jeder Zelle eine Durchmischungsvorrichtung z. B. nach Fig. 8 angeordnet werden kann.

## Patentansprüche

1. Batterie mit Elektrolytdurchmischungsvorrichtung, wobei die Batterie nachfolgende Merkmale aufweist:
- ein Batteriegehäuse (1) mit Seitenwänden (3, 4), einem Gehäuseboden (2) und einer Abdeckung,
- einen Flüssigelektrolyt (6), dessen Pegelstand (7) in vorbestimmten Toleranzgrenzen (7a, 7b) liegt,
- Elektroden (5), die in dem Flüssigelektrolyt (6) angeordnet sind,
- wenigstens an einer Seitenwand (3) ist in einem bestimmten Abstand und parallel zu dieser eine Strömungskanalplatte (8) angeordnet, so dass zwischen der Seitenwand (3) des Batteriegehäuses (1) und der Strömungskanalplatte (8) ein Strömungskanal (9) ausbildet ist, wobei das obere Ende des Strömungskanals (9) als Ausströmschlitz (9a) ausgebildet ist und das untere Ende des Strömungskanals (9) im unteren Drittel des Batterievolumens liegt,
- über den Elektroden (5) ist eine Mischwanne (10) mit einem Mischwannenboden (12) und Mischwannenseitenwänden (11 a, 11b, 11c) angeordnet, wobei
- die an den Ausströmschlitz (9a) grenzende Mischwannenseitenwand oben als Überlaufkante (13) ausgebildet ist,
- der Mischwannenboden (12) unterhalb des betriebsmäßig vorgesehenen Mindestpegels (7b) des Flüssigelektrolyten (6) liegt und
- im Mischwannenboden (12) mindestens eine Bodenöffnung (14) vorgesehen ist.

2. Batterie nach Anspruch 1, wobei die Bodenöffnung (14) der Mischwanne (10) an der Stelle vorgesehen ist, an welcher der Flüssigelektrolyt beim Überlaufen über die Überlaufkante (13) auf den Boden der Mischwanne fließt.

3. Batterie nach Anspruch 2, wobei in der innenliegenden Seitenwand (11c) der Mischwanne eine Öffnung vorgesehen ist.

4. Batterie nach Anspruch 1, wobei eine Mischwanne (15) als zweite Mischwanne vorgesehen ist, die sich an die innenliegende Seitenwand (11 c) der ersten Mischwanne (10) anschließt und der Boden (18) der zweiten Mischwanne wenigstens eine Bodenöffnung (16, 19) aufweist.

5. Batterie nach Anspruch 4, wobei der Boden (18) der zweiten Mischwanne (15) in der Höhe des Maximalpegels (7a) der Säure (6) angeordnet ist.

## Claims

1. Battery with electrolyte intermixing device, wherein the battery comprises the following features:
- a battery housing (1) with side walls (3, 4), a housing bottom (2) and a covering,
- a liquid electrolyte (6), whose level (7) has predetermined tolerance limits (7a, 7b),
- electrodes (5) disposed in the liquid electrolyte (6),
- at least at one side wall (3) at a specific distance and parallel thereto a flow channel plate (8) is disposed, so that between the side wall (3) of the battery housing (1) and the flow channel plate (8) a flow channel (9) is formed, wherein the upper end of the flow channel (9) is configured as an outflow slot (9a) and the lower end of the flow channel (9) is located in the lower third of the battery volume,
- above the electrodes (5) a mixing trough (10) is disposed with a mixing trough bottom (12) and mixing trough side walls (11 a, 11 b, 11 c), wherein
- the upper end of the mixing trough side wall adjacent the outflow slot (9a) is configured as an overflow edge (13),
- the mixing trough bottom (12) is located below the operationally intended minimum level (7b) of the liquid electrolyte (6) and
- at least one bottom opening (14) is provided in the mixing trough bottom (12).

2. Battery according to claim 1, wherein the bottom opening (14) of the mixing trough (10) is provided at a site where the liquid electrolyte, when flowing across the overflow edge (13), flows onto the bottom of the mixing trough.

3. Battery according to claim 2, wherein an opening is provided in the interior facing side wall (11 c) of the mixing trough.

4. Battery according to claim 1, wherein a mixing trough (15) is provided as a second mixing trough abutting the interior facing side wall (11 c) of the first mixing trough (10) and the bottom (18) of the second mixing trough has at least one bottom opening (16, 19).

5. Battery according to claim 4, wherein the bottom (18) of the second mixing trough (15) is disposed at the level of the maximum level (7a) of the acid (6).

## Revendications

1. Batterie à dispositif de mélange d'électrolyte, la batterie comprenant les caractéristiques suivantes:
- un boîtier de batterie (1) avec des parois latérales (3, 4), un fond de boîtier (2) et un couvercle,
- un électrolyte liquide (6), dont le niveau (7) se trouve dans des limites de tolérance (7a, 7b) prédéterminées,
- des électrodes (5), lesquelles sont disposées dans l'électrolyte liquide (6),
- au moins à une paroi latérale (3) est disposée une plaque de canal d'écoulement (8) à une distance déterminée et parallèle à celle-ci, de sorte qu'un canal d'écoulement (9) est formé entre la paroi latérale (3) du boîtier de batterie (1) et la plaque de canal d'écoulement (8), l'extrémité supérieure du canal d'écoulement (9) étant configurée comme une fente d'échappement (9a) et l'extrémité inférieure du canal d'écoulement (9) étant localisée dans le tiers inférieur du volume de batterie,
- au-dessus des électrodes (5) est disposée une cuve de mélange (10) dotée d'un fond de cuve de mélange (12) et de parois latérales de cuve de mélange (11 a, 11 b, 11 c), dans laquelle
- la paroi latérale de cuve de mélange adjacente à la fente d'échappement (9a) est configurée au-dessus comme un bord de trop-plein (13),
- le fond de cuve de mélange (12) est localisé sous le niveau minimum (7b) de l'électrolyte liquide (6) fonctionnellement prévu et
- au moins une ouverture de fond (14) est prévue dans le fond de cuve de mélange (12).

2. Batterie selon la revendication 1, dans laquelle l'ouverture de fond (14) de la cuve de mélange (10) est prévue à la position à laquelle l'électrolyte liquide lors du débordement au-delà du bord de trop-plein (13) circule sur le fond de la cuve de mélange.

3. Batterie selon la revendication 2, dans laquelle une ouverture est prévue dans la paroi latérale intérieure (11c) de la cuve de mélange.

4. Batterie selon la revendication 1 dans laquelle une cuve de mélange (15) est prévue en tant que seconde cuve de mélange, laquelle jouxte la paroi latérale intérieure (11c) de la première cuve de mélange (10) et le fond (18) de la seconde cuve de mélange comprend au moins une ouverture de fond (16, 19).

5. Batterie selon la revendication 4, dans laquelle le fond (18) de la seconde cuve de mélange (15) est disposé à hauteur du niveau maximal (7a) de l'acide (6).
